# EUROPEAN PATENT APPLICATION

(11) **EP 0 849 945 A2**
(43) Date of publication of application: **24.06.1998**
(21) Application number: 97310238.7
(22) Date of filing: 17.12.1997
(51) Int. Cl.: H04N 5/913

(54) **Video signal transmission method, superimposed information extraction method, video signal output device, video signal receiving device and video recording medium**

(30) Priority: 19.12.1996 JP 354580/96
(71) Applicant: SONY CORPORATION, Tokyo (JP)
(72) Inventor: Ogino, Akira, Shinagawa-ku, Tokyo (JP); Sugita, Takehiro, Shinagawa-ku, Tokyo (JP); Usui, Takashi, Shinagawa-ku, Tokyo (JP)
(74) Representative: Nicholls, Michael John

(57) **Abstract**

A superimposing position setting unit (15) uses a video synchronizing signal from a synchronization separating unit (14) as a reference signal, and generates a superimposing position indicating signal S4 for indicating an effective image plane interval of a video signal as a superimposing interval during which an SS duplication control signal is superimposed. A SS duplication control signal generator (16) generates a PN code sequence repeating every one vertical interval, and spreads the spectrum of a duplication control signal S3 by using the PN code sequence to form an SS duplication control signal. The SS duplication control signal is outputted to the effective image plane interval on the basis of the superimposing position indicating signal S4, and is superimposed on the video signal during the effective image plane interval of the video signal by an adder (17). Thus, the method according to the invention is able to prevent removal and deterioration of added information spread in spectrum and superimposed on the video signal and to securely provide the added information superimposed on the video signal.

## Description

The present invention relates to a method that secures control for preventing duplication by information for controlling to prevent duplication (duplication control information), when an information signal recorded on a recording medium is reproduced and transmitted with the duplication control information and the transmitted information is received and recorded on another recording medium; and a device and a recording medium to be used with the device.

Video Tape Recorders (VTRs) have been widespread, and there have been provided great many softwares that VTRs can reproduce. In recent years, reproduction devices such as a digital VTR and DVD (digital video disk) have come into reality, and people are able to easily reproduce good pictures and sounds to watch and listen.

On the other hand, there has been a risk that softwares thus abundantly provided are to be duplicated unlimitedly, and various measures for preventing duplication have been adopted so far.

For example, there is a method for substantially preventing duplication, although it is not a method for directly prohibiting duplication of an analog video signal, in which the difference in the AGC (auto gain control) system between a VTR as a recording device and a monitor receiver to provide pictures or the difference in the APC (auto phase control) characteristic is utilized.

For example, the VTR applies an AGC system by a pseudo synchronizing signal interpolated in a video signal, and the monitor receiver applies another AGC system that does not depend on the pseudo synchronizing signal; thus, the former method utilizes the difference in the AGC system. This method interpolates an extremely high level of a pseudo synchronizing signal as a synchronizing signal for the AGC when recording an analog video signal on an original recording medium, and interpolates the extremely high level of a pseudo synchronizing signal in the video signal supplied to a recording VTR from a reproducing VTR as the synchronizing signal for the AGC.

And, the VTR applies an APC by the phase of the color burst signal itself of a video signal, and the monitor receiver applies an APC system different from the foregoing; thus the latter method utilizes the difference in the APC characteristic. When recording an analog video signal on an original recording medium, this method partially inverts the phase of the color burst signal of the video signal, and outputs the video signal partially inverted in the phase of the color burst signal as the video signal supplied to the recording VTR from the reproducing VTR.

With the system thus arranged, the monitor receiver that receives an analog video signal from the reproducing VTR is able to reproduce a normal picture without being affected by the pseudo synchronizing signal or the partial phase inversion of the color burst signal used for the APC.

However, when receiving from the reproducing VTR an analog video signal in which the pseudo synchronizing signal is interpolated or the phase of the color burst signal is controlled to be inverted, as mentioned above, and recording the analog video signal on a recording medium, the VTR cannot properly perform the gain control, or the phase control in accordance with the input signal; thus the VTR becomes unable to normally record the video signal. Accordingly, the VTR cannot present a normal picture good for watching and listening when reproducing the recorded video signal.

Such a processing of an analog video signal is not to prohibit duplication, but to obstruct to obtain a normal reproduced picture good for watching and listening, which is in a sense a passive control of preventing duplication.

On the other hand, in processing a digitized data, for example, a digital video signal, a direct control for preventing duplication is applied such that a duplication control signal formed of a duplication prevention code, a generation limitation code of duplication, and the like are added on the video signal as digital data and recorded on a recording medium to thereby prohibit duplication.

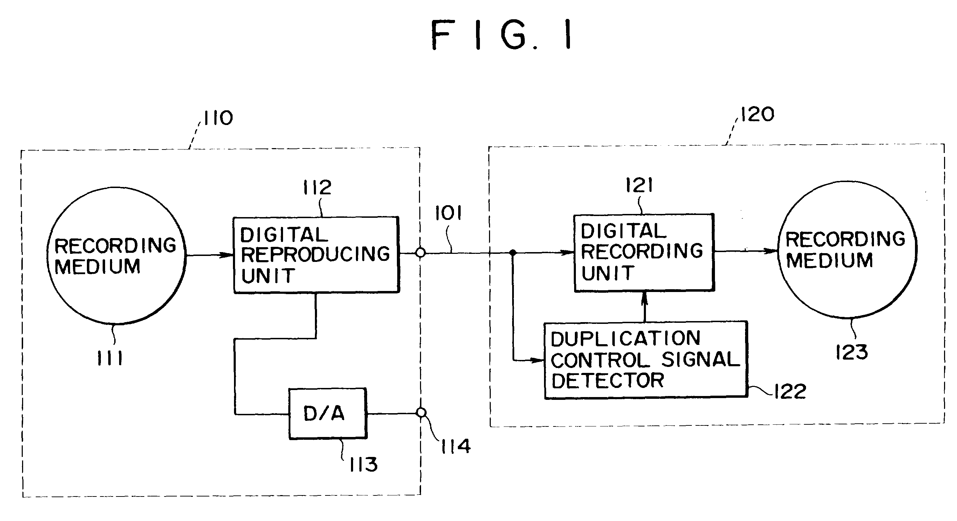

Fig. 1 is a basic block diagram of a duplication device to process the digitized data, in which digital data reproduced by a digital reproducing device 110 is transmitted to a digital recording device 120 through a digital transmission line 101. The duplication device performs duplication if the data permits to duplicate, and prohibits duplication if the data does not permit to duplicate.

On a recording medium 111 mounted on the digital reproducing device 110, a duplication control information as added information is recorded in addition to main digital information. The duplication control information indicates the contents of control such as prohibition against duplication, permission for duplication, or generation limit of duplication. A digital reproducing unit 112 reads out the information from the recording medium 111, and acquires the duplication control information as well as the main digital information, which are transmitted to the digital recording device 120 through the digital transmission line 101.

A duplication control signal detector 122 of the digital recording device 120 detects a duplication control signal from the information signal received through the digital transmission line 101, and discriminates the contents of control. And, the duplication control signal detector 122 transmits the discrimination result to a digital recording unit 121.

When the discrimination result of the duplication control signal from the duplication control signal detector 122 indicates permission to record the digital information inputted through the digital transmission line 101, the digital recording unit 121 converts the foregoing input digital signal into digital information suitable for recording, and writes it in on a recording medium 123. On the other hand, when the discrimination result of the duplication control signal from the duplication control signal detector 122 indicates prohibition against duplication, the digital recording unit 121 is designed not to record the foregoing input digital information.

Further, when the discrimination result of the duplication control signal from the duplication control signal detector 122 indicates permission to duplicate only for the first generation, the digital recording unit 121 converts the foregoing input digital signal into a digital information suitable for recording, and writes it in on the recording medium 123, and at the same time, changes the duplication control signal as added information into a signal to indicate prohibition against duplication (duplication prohibition for the next generation), and records the signal on the recording medium 123. Accordingly, it becomes impossible to duplicate a video signal by using the duplicated recording medium 123.

Thus, in the so-called digital connection such that the main information signal and the duplication control signal as added information are supplied to the recording device in the form of a digital signal, the transmitted digital data contain the duplication control signal. Therefore, using the duplication control signal can secure the control for preventing duplication such as prohibition against duplication in the recording device.

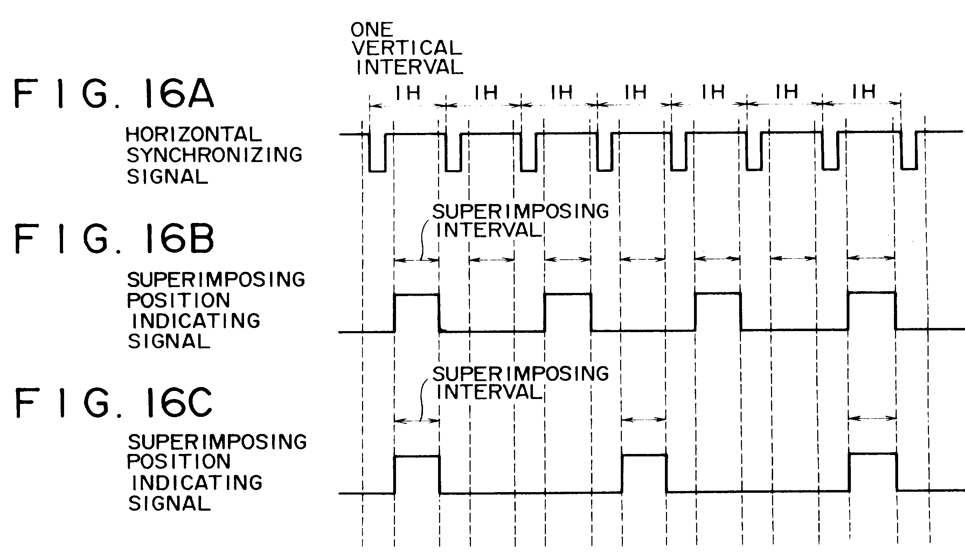

Incidentally, if the digital reproducing device in Fig. 16 is a digital VTR, for example, in order to monitor a reproduced video signal and audio signal, only the video signal and audio signal being a main information signal are converted into analog signals through a D/A converter 113 to be guided to an analog output terminal 114, where a monitor receiver is usually connected.

In this manner, although the reproducing device is for digital information, the analog signal guided to the analog output terminal 114 does not contain the duplication control signal. Accordingly, in case of the analog connection that an analog VTR is connected to the analog output terminal 114, it becomes possible to duplicate information signals.

Accordingly, it is suggested to superimpose the duplication control signal on the D/A converted video and audio signals. However, it is difficult to superimpose the duplication control signal and extract the duplication control signal in the recording device and use it for duplication prevention control, without deteriorating the D/A converted video and audio signals.

Therefore, in the analog connection, there has been only the passive method for preventing duplication that utilizes the difference in the AGC system between the foregoing VTR and the monitor receiver or the difference in the APC characteristic.

Incidentally, in the foregoing method for controlling duplication prevention that utilizes the difference in the AGC system between the VTR and the monitor receiver or the difference in the APC characteristic, there is a chance that a video signal can be recorded normally depending on the AGC system or the APC characteristic of the recording device, and even the passive duplication prevention cannot occasionally be performed. Further, there has been a problem that disturbances can be generated on a reproduced picture by the monitor receiver.

In order to solve the foregoing problems, as an effective control method for preventing duplication that can be applied to either of the analog connection and the digital connection, without deteriorating a reproduced video signal and audio signal, the applicant has proposed a digital recording method or an analog recording method of a video signal in which a duplication control signal is spread in spectrum and the spread spectrum duplication control signal is superimposed on the video signal in the analog signal state (refer to Japanese Patent Application Laid Open No. 7-339959).

In this method, a code of a PN (Pseudo random Noise) sequence (hereunder, referred to as PN code) used as a spectrum spreading code is generated periodically at a sufficiently fast rate, and the duplication control signal is multiplied by the PN code to thereby spread the spectrum of the duplication control signal. As the result, a narrow band and high level duplication control signal is transformed into a wide band and low level signal that does not affect a video signal or an audio signal. And, the spread spectrum duplication control signal is superimposed on an analog video signal to be recorded on a recording medium. In this case, it is possible to record either of the analog and digital video signals on the recording medium.

In this method, since the duplication control signal is transformed into a spread spectrum, wide band and low level signal, and is superimposed on a video signal, it is difficult for a person to make an illegal duplication to remove the duplication control signal from the video signal on which the duplication control signal is superimposed.

However, it is possible to extract the duplication control signal from the video signal on which the duplication control signal is superimposed by applying a reverse spectrum spreading and utilize the detected duplication control signal. Therefore, the duplication control signal as well as the video signal can reliably be provided to the recording device, and at the same time the duplication control signal can be detected on the side of the recording device and the duplication control can reliably be carried out in accordance with the detected duplication control signal.

As described above, the duplication control signal is spread in spectrum by using a PN code generated at a sufficiently fast rate. Therefore, the spread spectrum duplication control signal becomes a high frequency signal.

Accordingly, when, on the side of the reproducing device to output a video signal on which a spread spectrum duplication signal is superimposed, a noise canceller for removing high frequency components higher than a specific frequency from the outputted video signal as noises is used to output the video signal having the high frequency components removed, there is a risk of removal or deterioration of the duplication control signal spread in spectrum and superimposed on the video signal.

Further, in a case that a reproducing device replaces the video synchronizing signal with a new one by using a TBC (Time Base Corrector) circuit as in a VTR so as to remove a time base fluctuation resulting from a rotational irregularity of a drum, a tape running unevenness, and the like, and to output a video signal having a correct time base, there is a possibility that a spread spectrum duplication control signal superimposed on a part of the video synchronizing signal is removed, which can supposedly deteriorate the duplication control signal spread in spectrum and superimposed on the video signal.

In such a case, on the side of a recording device to receive a video signal on which a spread spectrum duplication control signal is superimposed, there is a case that the duplication control signal cannot be detected or a complete duplication control signal,cannot be acquired, which disables the duplication prevention control in accordance with the duplication control signal.

The present invention has been made in view of the foregoing problems, and an object of the present invention is to provide a method, device, and recording medium that securely superimpose spread spectrum added information on a video signal.

### SUMMARY OF THE INVENTION

In order to solve the foregoing problems, a video signal transmission method set forth in Claim 1 according to the invention superimposes spread spectrum added information on a video signal to transmit, in which the spread spectrum added information is superimposed during a discontinuous video signal interval determined on the basis of a video synchronizing signal of the video signal.

And, a video signal transmission method set forth in Claim 2 according to the invention superimposes spread spectrum added information on a video signal to transmit, in which a spectrum of the added information is spread so that the spread spectrum of the added information comes into a frequency band lower than a predetermined frequency band.

And, an extraction method set forth in claim 7 according to the invention extracts added information from a video signal on which a spread spectrum added information is superimposed during a discontinuous video signal interval determined on the basis of a video synchronizing signal, in which a superimposing interval is specified during which the spread spectrum added information is superimposed on the basis of the video synchronizing signal, a spreading code is generated for a reverse spectrum spreading being the same spreading code as one used in the spectrum spreading of the added information, and the reverse spectrum spreading is applied to the spread spectrum added information superimposed during the superimposing interval by using the spreading code for the reverse spectrum spreading to thereby extract the added information superimposed on the video signal.

And, an extraction method set forth in claim 9 according to the invention extracts an added information from a video signal on which a spread spectrum added information is superimposed as a signal within a frequency band lower than a frequency band specified in the video signal frequency band, in which a spreading code is generated for a reverse spectrum spreading being a spreading code having the same frequency and the same code pattern as those used in the spectrum spreading of the added information, and the reverse spectrum spreading is applied to the spread spectrum added information superimposed during the superimposing interval by using the spreading code for the reverse spectrum spreading to thereby extract the added information superimposed on the video signal.

According to the video signal transmission method set forth in Claim 1, a spread spectrum added information is superimposed during a discontinuous video signal interval determined on the basis of a video signal.

Accordingly, if a video synchronizing signal of a video signal on which a spread spectrum added information is superimposed is replaced with a new one, even a part of the spread spectrum added information will not be removed.

According to the video signal transmission method set forth in Claim 2, the spectrum of a spread spectrum added information superimposed on a video signal comes into a frequency band lower than a frequency band specified in the video signal band.

Thereby, the spread spectrum added information can be brought into a signal within a frequency band that a noise canceller cannot remove, and if a noise reduction is processed to the video signal, the added information spread in spectrum and superimposed on the video signal will not be removed or deteriorated.

According to the superimposed information extraction method set forth in Claim 7, since a superimposing interval during which the spread spectrum added information is superimposed is determined on the basis of the video synchronizing signal, a discontinuous superimposing interval during which a duplication control signal is superimposed is specified on the basis of the video synchronizing signal in the supplied video signal.

And, the reverse spectrum spreading is applied to the spread spectrum added information superimposed during the discontinuous superimposing interval by using the same spreading code as the spreading code used in the spectrum spreading, and thereby the added information superimposed on a video signal can be extracted.

Thus, the added information spread in spectrum and superimposed during the discontinuous superimposing interval can be detected securely and accurately.

According to the superimposed information extraction method set forth in Claim 9, the spectrum of the spread spectrum added information superimposed on a video signal is defined to be within a frequency band lower than a frequency band specified in the video signal band.

Therefore, applying the reverse spectrum spreading to a duplication control signal superimposed on a video signal by using a spreading code having the same frequency and the same code pattern as the spreading code used in the spectrum spreading of the duplication control signal will extract the added information spread in spectrum and superimposed on the video signal.

Thus, the spread spectrum added information having a defined frequency band can be detected securely and accurately.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:
Fig. 1 is a block diagram for explaining a construction of a conventional duplication control system.
Fig. 2 is a block diagram for explaining one embodiment of a video signal output device according to the present invention;
Fig. 3 is a block diagram for explaining one example of an inserting position setting unit of the video signal output device shown in Fig. 1;
Fig. 4 is a chart for explaining one example of a superimposing position indicating signal generated in the video signal output device shown in Fig. 2;
Fig. 5 is a block diagram for explaining one example of a SS duplication control signal generator of the video signal output device shown in Fig. 2;
Fig. 6 is a circuit diagram for explaining one example of a PN code generator used in the SS duplication control signal generator of the video signal output device shown in Fig. 2;
Fig. 7 is a chart showing the relation between an SS duplication control signal and an information signal by spectrum;
Fig. 8 is a block diagram for explaining one embodiment of a video signal recording device to which a video signal receiving device according to the invention is applied;
Fig. 9 is a block diagram for explaining another embodiment of a video signal output device according to the invention;
Fig. 10 is a block diagram for explaining another embodiment of a video signal recording device to which a video signal receiving device according to the invention is applied;
Fig. 11 is a block diagram for explaining one example of a clock generator of the video signal output device shown in Fig. 9;
Fig. 12 is a block diagram for explaining one example of an SS duplication control signal generator of the video signal output device shown in Fig. 9;
Fig. 13 is a block diagram for explaining another embodiment of a video signal output device according to the invention;
Fig. 14 is a block diagram for explaining another embodiment of a video signal recording device to which a video signal receiving device according to the invention is applied;
Fig. 15 is a block diagram for explaining one example of a timing generator of the video signal output device shown in Fig. 9; and
Fig. 16 is a chart for explaining another example of a superimposing position indicating signal.

### DESCRIPTION OF THE PREFERRED EMBODIMENTS

The embodiment of the video signal transmission method, superimposed information extraction method, video signal output device, video signal receiving device, and video signal recording medium according to the invention will hereafter be described with reference to the accompanying drawings.

The video signal output device and a video signal recording device in which the video signal receiving device according to the invention is employed will be described as one applied to a recording/reproducing device for the DVD (Digital Video Disk). And, the description of the audio signal system will be omitted for simplicity.

### [First Embodiment]

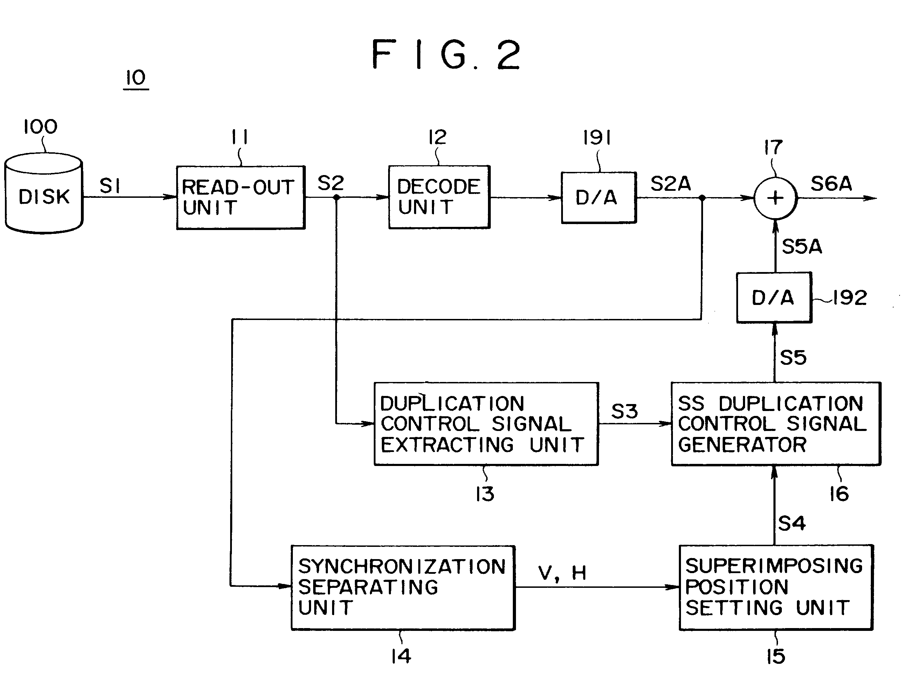

Fig. 2 is a block diagram for explaining a video signal output device 10 (hereunder, referred to simply as output device) used in a video signal duplication control system of this embodiment. That is, the output device 10 corresponds to the reproducing system of the DVD device.

In Fig. 2, a recording medium 100 is a medium on which a digitized video signal and audio signal, and a duplication control signal as added information are recorded, which is a DVD in this case. The duplication control signal may be recorded on the innermost track area of the disk, called TOC (Table of Contents) and directory, or it may be recorded on the track where video data and audio data are recorded, while securing the recording area. The latter case will now be described, in which reading out the video data accompanies reading out the duplication control signal.

Further, the duplication control signal may contain the generation limitation of duplication such as permission for duplication only for the first generation. However, to simplify the description, this embodiment deals with the duplication control signal as a signal to indicate prohibition against duplication or permission for duplication of a video signal, which is formed of one bit and is added on the video signal.

As shown in Fig. 2, the output device 10 is provided with a read-out unit 11, decode unit 12, duplication control signal extracting unit 13, synchronization separating unit 14, superimposing position setting unit 15, SS duplication control signal generator 16 (SS indicates the abbreviation of a spread spectrum), adder 17, and D/A converters 191, 192.

The read-out unit 11 reads out a reproduced video signal component S2 from a signal S1 obtained by reproducing the recording medium 100, and supplies the signal component S2 to the decode unit 12 and the duplication control signal extracting unit 13.

The decode unit 12 decodes the reproduced video signal component S2 and forms a digital video signal, which is supplied to the D/A converter 191. The D/A converter 191 converts the digital video signal into an analog video signal S2A containing a synchronizing signal, and supplies the analog video signal S2A to the synchronization separating unit 14 and the adder 17.

The duplication control signal extracting unit 13 extracts a duplication control signal S3 added on the reproduced video signal component S2, and supplies the duplication control signal S3 to the SS duplication control signal generator 16.

On the other hand, the synchronization separating unit 14 separates a vertical synchronizing signal V and horizontal synchronizing signal H from the analog video signal S2A, and supplies the vertical and horizontal synchronizing signals V, H to a superimposing position setting unit 15.

The superimposing position setting unit 15 sets a video signal interval (hereunder, referred to as superimposing interval) during which a spread spectrum duplication control signal is superimposed while using the vertical synchronizing signal V and horizontal synchronizing signal H as a reference signal, and generates a superimposing position indicating signal S4 that controls a superimposing position of a spread spectrum duplication control signal.

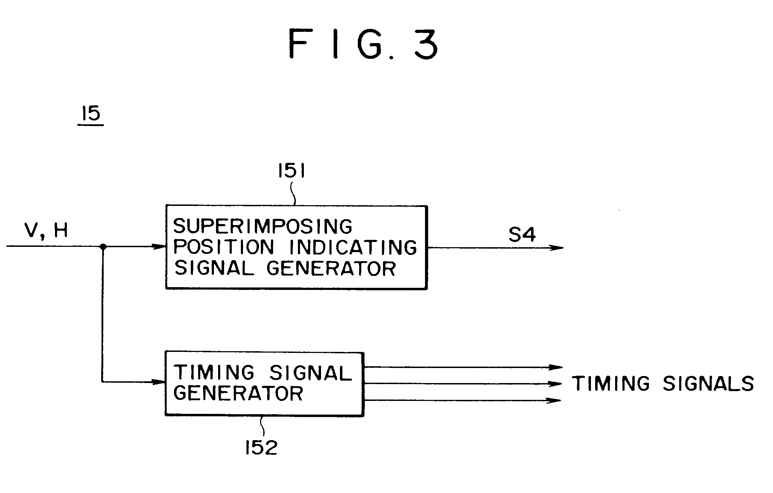

Fig. 3 is a block diagram for explaining the superimposing position setting unit 15. As shown in Fig. 3, the superimposing position setting unit 15 of this embodiment contains a superimposing position indicating signal generator 151 and timing signal generator 152, to which the vertical synchronizing signal V and horizontal synchronizing signal H are supplied from the synchronization separating unit 14.

The superimposing position indicating signal generator 151 generates the foregoing superimposing position indicating signal S4 on the basis of the vertical synchronizing signal V and horizontal synchronizing signal H.

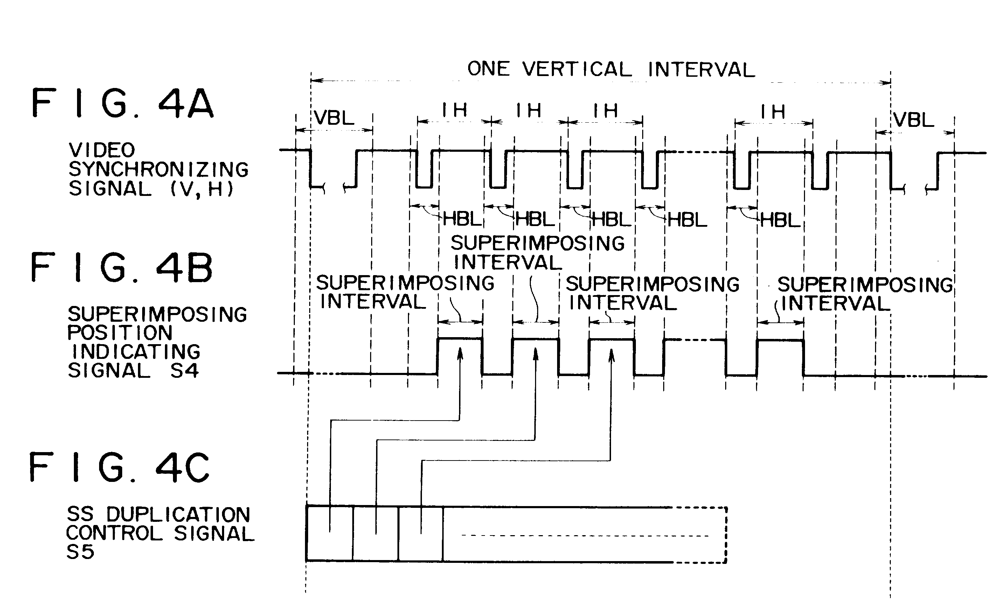

Fig. 4 is a chart for explaining the superimposing position indicating signal S4 generated in the superimposing position indicating signal generator 151. The superimposing position indicating signal generator 151 generates the superimposing position indicating signal S4 (Fig. 4B) for superimposing a spread spectrum duplication control signal on a video signal during an effective image plane interval thereof, on the basis of the vertical synchronizing signal V and horizontal synchronizing signal H shown in Fig. 4A.

That is, the superimposing position indicating signal generator 151 generates the superimposing position indicating signal S4 for indicating the effective image plane interval except a vertical blanking interval VBL and horizontal blanking interval HBL as a superimposing interval during which a spread spectrum duplication control signal is superimposed, and supplies the superimposing position indicating signal S4 to the SS duplication control generator 16.

The output device 10 superimposes during a high level interval of the superimposing position indicating signals S4 being the effective image plane interval, on the basis of the superimposing position indicating signal S4, a duplication control signal (Fig. 4C) whose spectrum is spread by a PN code sequence repeating every one vertical interval using the leading edge of the vertical synchronizing signal V as the reference.

The timing signal generator 152 generates various timing signals used in this output device 10 on the basis of the vertical synchronizing signal V and horizontal synchronizing signal H.

The SS duplication control signal generator 16 spreads the spectrum of the duplication control signal S3 extracted by the foregoing duplication control signal extracting unit 13, and at the same time, forms a spread spectrum duplication control signal S5 to be superimposed on the video signal S2A, on the basis of the superimposing position indicating signal S4 from the superimposing position setting unit 15.

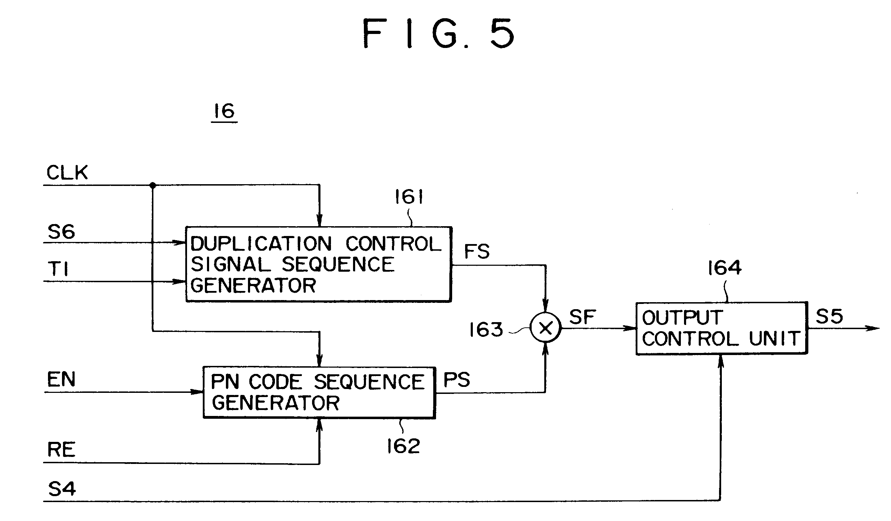

Fig. 5 is a block diagram for explaining the SS duplication control signal generator 16 in this embodiment. As shown in Fig. 5, the SS duplication control signal generator 16 contains a duplication control signal sequence generator 161, PN code sequence generator 162, multiplier 163, and output control unit 164.

The duplication control signal sequence generator 161 is supplied with a clock signal CLK, the duplication control signal S3 from the duplication control signal extracting unit 13, and a timing signal T1. In this case, the timing signal T1 indicates the breakpoint timing of the duplication control signal S3 by each one bit. In this first embodiment, the clock signal CLK is a clock signal synchronized with a reproduced digital signal.

And, the duplication control signal sequence generator 161 outputs the duplication control signal S3 for predetermined clocks by each one bit, and thereby produces a duplication control signal sequence FS, which is supplied to the multiplier 163. In this case, the duplication control signal sequence FS is generated to accompany a low bit data of one or two bits for indicating prohibition against duplication and permission for duplication and the like, for example, by each interval of one vertical cycle.

The PN code sequence generator 162 is supplied with the clock signal CLK, an Enable signal EN, and a reset signal (initializing signal) RE. The Enable signal EN is a signal for putting the PN code sequence generator 162 into the operational state. In this embodiment, the Enable signal EN is generated by the output device 10 being powered, and is supplied to the PN code sequence generator 162. The reset signal RE is a signal for making the PN code sequence generator 162 generate the PN code sequence having a predetermined code pattern from the leading of the PN code sequence.

The PN code sequence generator 162 is brought into the operational state in accordance with the Enable signal EN. And, the PN code sequence generator 162 generates the PN code sequence from the leading thereof by each time at which the reset signal RE is supplied, and generates a PN code sequence PS so as to synchronize with the clock signal CLK. The PN code sequence PS thus generated is supplied to the multiplier 163. In this embodiment, as mentioned above, the PN code sequence is generated to repeat every one vertical interval.

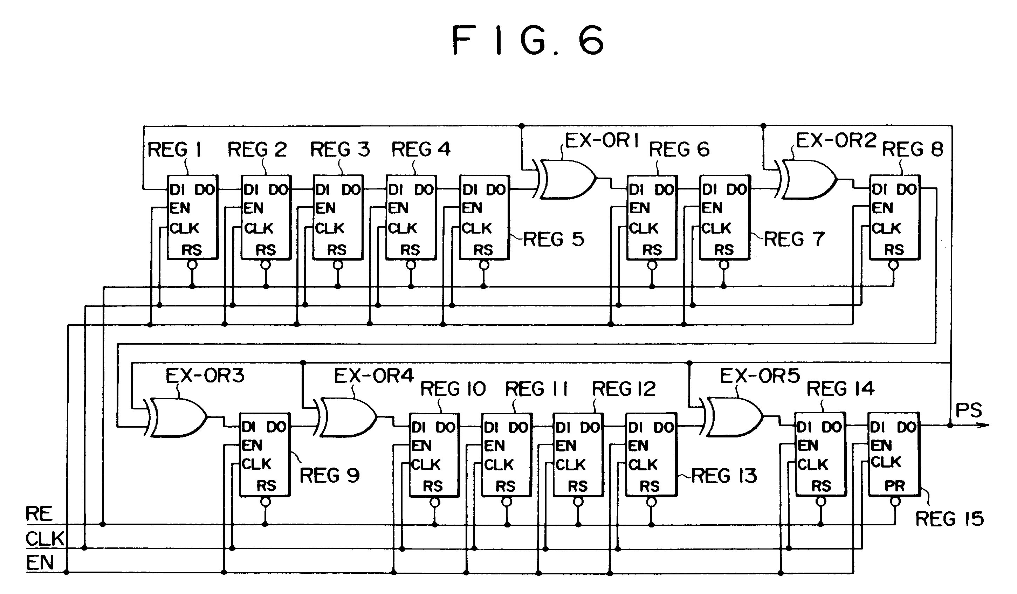

Fig. 6 is a chart showing a construction of the PN code sequence generator 162. The PN code sequence generator 162 in this example is formed of 15 D flip flops REG 1 to REG 15 constituting a 15 stage shift register, and exclusive OR circuits EX-OR1 to EX-OR5 that operate appropriate tap outputs of this shift register. And, the PN code sequence generator 162 shown in Fig. 5 generates the PN code sequence PS of the M sequence on the basis of the reset signal RE, clock signal CLK, and Eanable signal EN.

The multiplier 163 spreads the spectrum of the duplication control signal sequence FS by using the PN code sequence PS from the PN code sequence generator 162. The multiplier 163 produces a spread spectrum duplication control signal, namely, the duplication control signal whose spectrum is spread (hereunder, referred to as SS duplication control signal) SF.

The output control unit 164 controls the output of the SS duplication control signal SF on the basis of the superimposing position indicating signal S4 from the superimposing position setting unit 15. That is, as shown in Fig. 4, the output control unit 164 sequentially outputs the SS duplication control signal SF spread in spectrum by using the PN code sequence PS repeating every one vertical interval, in correspondence with the high level interval of the superimposing position indicating signal S4. The SS duplication control signal S5 outputted from the SS duplication control signal generator 16 is supplied to the D/A converter 192.

The D/A converter 192 converts the SS duplication control signal S5 into an analog SS duplication control signal S5A, which is supplied to the adder 17.

The adder 17 superimposes the analog SS duplication control signal S5A on the analog video signal S2A to form an analog output video signal S6A to output. Thus, the adder 17 functions as superimposing means for superimposing on the analog video signal S2A the analog SS duplication control signal S5A being a duplication control signal whose spectrum is spread by the PN code sequence PS.

And, the analog output video signal S6A on which a spread spectrum duplication control signal is superimposed is supplied to a monitor receiver to display pictures and a recording device 20 described later.

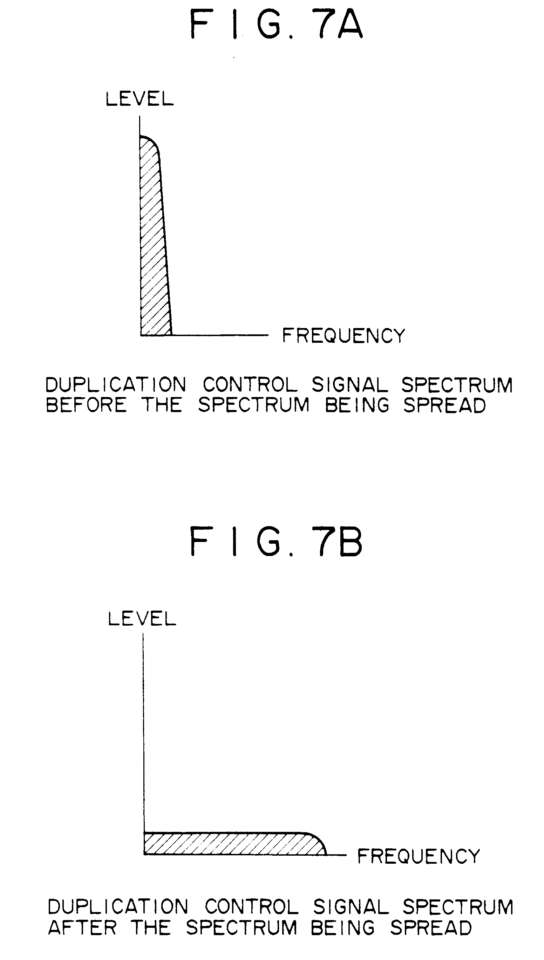

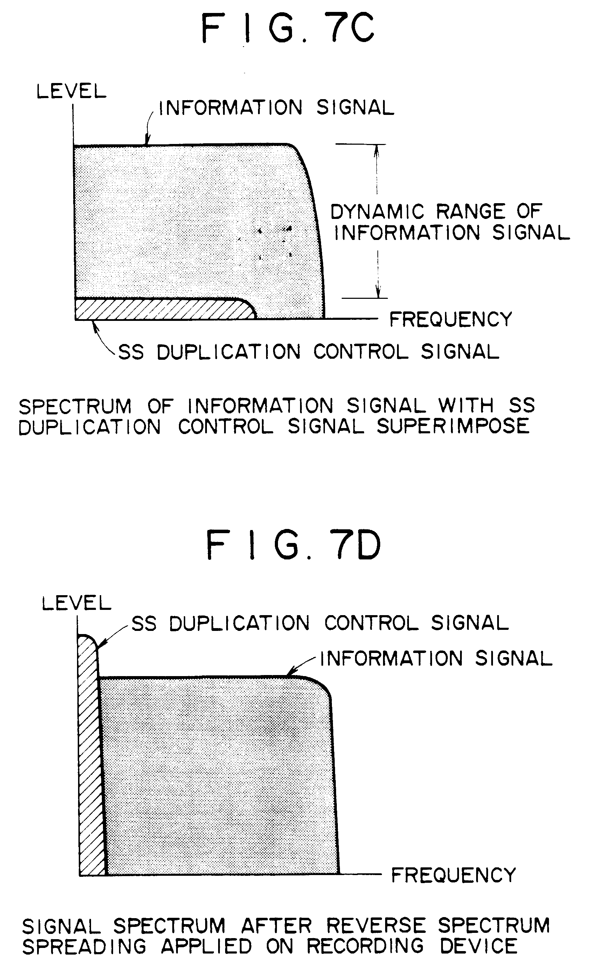

Fig. 7 illustrates a relation between a duplication control signal and a main information signal (video signal in this example) in spectrum. The duplication control signal contains a low information, and is a signal of a low bit rate and a narrow band signal as shown in Fig. 7(a). Applying the spectrum spreading to this signal will produce a wide band signal as shown in Fig. 7(b). Here, the level of the spread spectrum signal becomes low inversely proportionally to the expansion rate of the band.

This spread spectrum signal, namely, the analog SS duplication control signal S5A is superimposed on the information signal by the adder 17. In this case, as shown in Fig. 7(c), the analog SS duplication control signal S6A is made sufficiently lower in level than the maximum level of a video signal as the main information signal, before being superimposed on the information signal. As the analog SS duplication control signal S6A is superimposed in this manner, the main information signal will not substantially be deteriorated. Accordingly, when the video signal on which the SS duplication control signal is superimposed is supplied to the monitor receiver, and the picture is reproduced, the reproduced picture is not substantially affected by the SS duplication control signal, presenting a good reproduced picture.

On the other hand, in order to detect the SS duplication control signal on the recording side, applying the reverse spectrum spreading as described later will restore the SS duplication control signal again as a narrow band signal, as shown in Fig. 7(d). To apply a sufficient band spreading rate will make the power of the duplication control signal after the reverse spectrum spreading surpass that of the main information signal, which enables the duplication control signal to be detected.

Since the SS duplication control signal in this case is superimposed on the analog video signal in an identical time and identical frequency, it is impossible to delete or modify the SS duplication control signal by using a frequency filter or by a simple replacement of information.

Therefore, the SS duplication control signal superimposed on the video signal is not to be removed, and the SS duplication control signal can reliably be supplied to the devices such as a monitor receiver and recording device.

Further, the SS duplication control signal is superimposed only during the effective image plane interval being discontinuous due to the presence of the vertical blanking interval VBL and horizontal blanking interval HBL. Therefore, even if the video synchronizing signal is replaced with a new one in the output device 10 or the recording device 20 described later, the SS duplication control signal will not lose even a part of it. That is, the replacement of the video synchronizing signal does not deteriorate the SS duplication control signal.

Next, the recording device 20 that records the analog video signal S6A supplied from the foregoing output device 10 will be described.

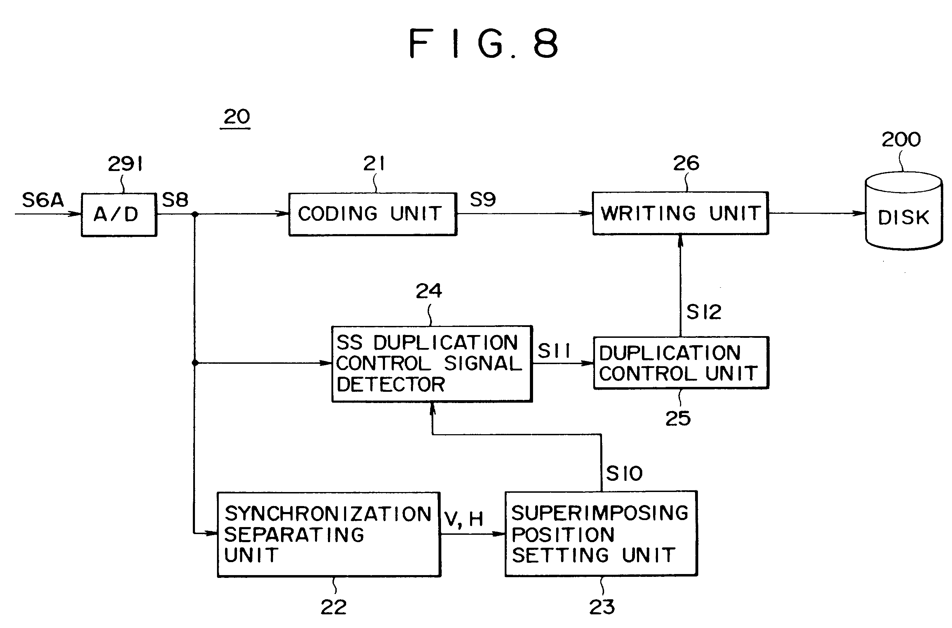

Fig. 8 is a block diagram for explaining the video signal recording device 20 (hereunder, referred to simply as recording device) which is used in the video signal duplication control system in this embodiment. The recording device 20 corresponds to a recording system of the DVD device in this first embodiment.

As shown in Fig. 8, the recording device 20 is provided with a coding unit 21, synchronization separating unit 22, superimposing position setting unit 23, detection unit (hereunder, referred to as SS duplication control signal detector) 24 for detecting a duplication control signal spread in spectrum and superimposed on a video signal, duplication control unit 25 for controlling permission for duplication and prohibition against duplication, writing unit 26, and A/D converter 291. And, a recording medium 200 is a DVD which a video signal is written in by the recording device 20.

The analog video signal S6A supplied from the output device 10 is converted into a digital video signal S8 by the A/D converter 291, and the digital video signal S8 is supplied to the coding unit 21, synchronization separating unit 22, SS duplication control signal detector 24.

The coding unit 21, while receiving the digital video signal S8 and executing a coding processing such as eliminating the video synchronizing signal and applying data compression to the digital video signal, forms a digital video signal S9 for recording to be supplied to a recording medium 200, which is supplied to the writing unit 27.

The synchronization separating unit 22 extracts the vertical synchronizing signal V and the horizontal synchronizing signal H from the digital video signal S8 before the coding processing, which are supplied to the superimposing position setting unit 23.

The superimposing position setting unit 23 employs the vertical synchronizing signal V and the horizontal synchronizing signal H as the reference signal, and as mentioned above, generates a superimposing position indicating signal S10 to indicate a superimposing interval during which the SS duplication control signal is superimposed.

The superimposing position setting unit 23 is formed in the same manner as the superimposing position setting unit 16 of the output device 10. And, the superimposing position setting unit 23 generates the superimposing position indicating signal S10 being the same signal as the superimposing position indicating signal S4, shown in Fig. 4B, generated in the superimposing position setting unit 15 of the output device 10.

Namely, the superimposing position indicating signal S10 generated by the superimposing position setting unit 23 is a signal to indicate the effective image plane interval. The superimposing position indicating signal S10 is supplied to the SS duplication control signal detector 24.

The SS duplication control signal detector 24 functions as reverse spectrum spreading processing means; and it extracts the duplication control signal spread in spectrum superimposed on the video signal S8, and supplies the extracted duplication control signal as a duplication control signal S11 to the duplication control unit 25.

The SS duplication control signal detector 24 detects a video signal according to the superimposing position indicating signal S10, within the effective image plane interval during which the SS duplication control signal is superimposed. And, in the same manner as the output device 10, the SS duplication control signal detector 24 generates a PN code sequence for the reverse spectrum spreading repeating every one vertical interval, using the leading edge of the vertical synchronizing signal V as the reference. This PN code sequence for the reverse spectrum spreading has the same code pattern as the PN code sequence used for spreading the spectrum of the duplication control signal in the output device 10.

And, the SS duplication control signal detector 24 multiplies a video signal within the effective image plane interval during which the SS duplication control signal is superimposed thereon by a PN code sequence for the reverse spectrum spreading having the same PN code pattern as the PN code sequence used in the spectrum spreading, thus performing the reverse spectrum spreading. Thereby, the SS duplication control signal detector 24 extracts a duplication control signal superimposed on the video signal, and supplies the extracted duplication control signal S11 to the duplication control unit 25.

The duplication control unit 25 decodes the duplication control signal S11, and judges if the video signal S6A supplied to the recording device 20 indicates prohibition against duplication or permission for duplication. And, on the basis of the judgment result, the duplication control unit 25 generates a write control signal S12, which is supplied to the writing unit 26, thereby controlling permission for and prohibition against writing in the video signal S9.

The writing unit 26 writes in the video signal S9 on the recording medium 200, if the write control signal S12 indicates permission to write in; and if the write control signal S12 indicates prohibition against writing in, the writing unit 26 is controlled not to write in the video signal S9 on the recording medium 200.

In this manner, the recording device 20 in this first embodiment applies the reverse spectrum spreading, in correspondence with the output device 10, to a video signal within the effective image plane interval during which the SS duplication control signal is superimposed thereon, by using the same PN code sequence as the PN code sequence used in spreading the spectrum of the duplication control signal, thereby extracting the duplication control signal superimposed on the video signal.

As described above, since the SS duplication control signal is superimposed during the effective image plane interval, if the synchronizing signal is replaced with a new one, the SS duplication control signal superimposed on the video signal will not be lost. And, the superimposing position of the SS duplication control signal is accurately detected in the recording device 20 on the basis of the video synchronizing signal. Thus, as described above, applying the reverse spectrum spreading to the video signal within the effective interval during which the SS duplication control signal is superimposed thereon by using the same PN code sequence as the PN code sequence used in the spectrum spreading can securely extract the duplication control signal superimposed on the video signal.

In this manner, the output device 10 as well as the recording device 20 is designed to employ the identical video synchronizing signal as the reference signal to generate the PN code sequence at each time synchronizing with the video synchronizing signal. Thereby, the PN code can be generated at the same timing to the video synchronizing signal in each of the output device 10 and the recording device 20.

Consequently, in the recording device 20, it is not necessary to detect a PN code sequence whereby the spectrum of a duplication control signal superimposed on a video signal is spread by using, for example, a sliding correlator, and to perform the phase control whereby a PN code sequence for the reverse spectrum spreading is to be generated at the same timing. For this reason, the duplication control signal can quickly be extracted by the reverse spectrum spreading.

### [Second Embodiment]

Next, a second embodiment of the video signal duplication control system according to the invention will be described which is comprised of the video signal output device and the video signal recording device.

In the foregoing first embodiment, superimposing an SS duplication control signal during the effective image plane interval prevents the duplication control signal spread in spectrum and superimposed on the video signal from being removed or deteriorated, if the video synchronizing signal is replaced with a new one.

However, if high frequency components in a video signal in the output device and the recording device are regarded as noises and a noise canceller for removing the high frequency components in the video signal is employed, there will be a possibility that the SS duplication control signal spread in spectrum and superimposed on the video signal is removed or deteriorated.

When a noise canceller is employed for removing high frequency components, for example, higher than 1 MHz from an outputted video signal in the output device, and if an SS duplication control signal spread in spectrum and superimposed on the video signal contains the frequency components higher than 1 MHz, the SS duplication control signal will be removed by the noise canceller.

Accordingly, in the second embodiment, the output device generates an SS duplication control signal inside a frequency band within the video signal frequency band that is not possible for the noise canceller to remove, and superimposes the SS duplication control signal on a video signal to output. And, the recording device receives the video signal from the output device, and in correspondence with the output device, generates the same PN code sequence as the PN code sequence used in the spectrum spreading, thereby extracting the duplication control signal superimposed on the video signal.

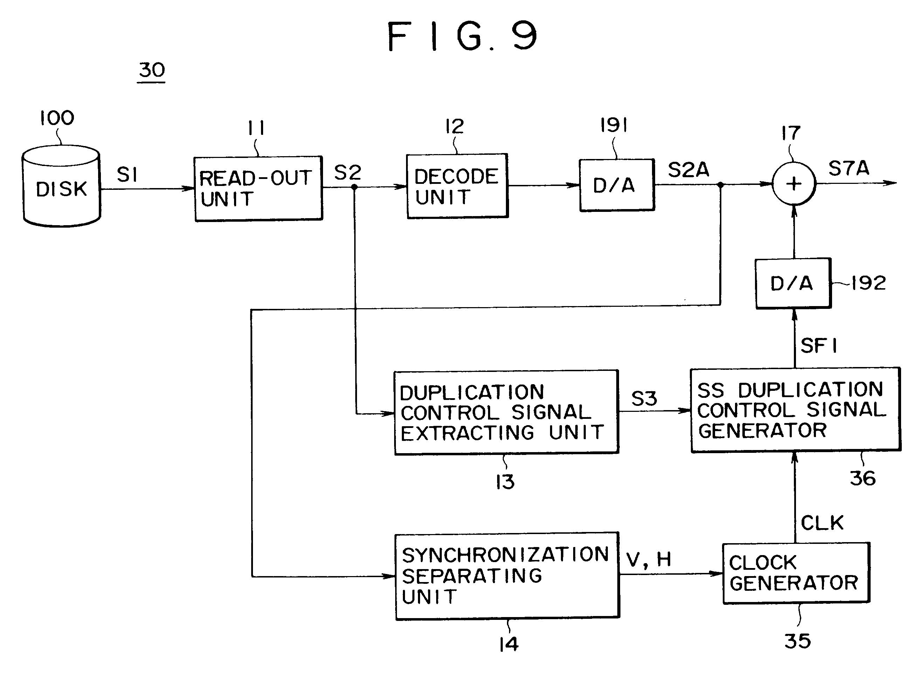

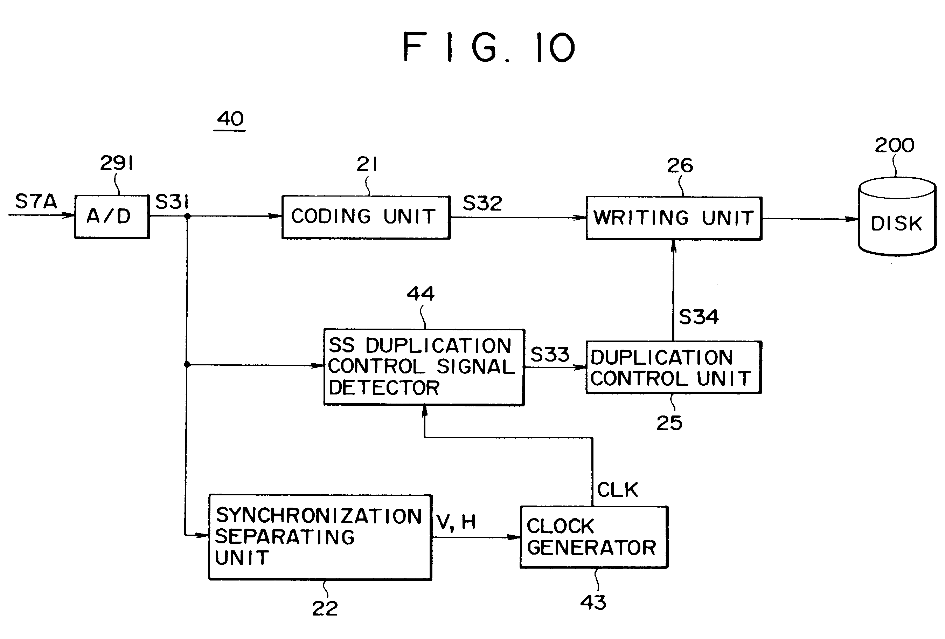

Fig. 9 is a block diagram for explaining an output device 30 in the second embodiment, and Fig. 10 is a block diagram for explaining a recording device 40.

As shown in Fig. 9, the output device 30 is provided with a read-out unit 11, decode unit 12, duplication control signal extracting unit 13, synchronization separating unit 14, adder 17, clock generator 35, SS duplication control signal generator 36, and D/A converters 191, 192. The other parts except the clock generator 35 and the SS duplication control signal generator 36 are configured in the same manner as the corresponding parts in the foregoing output device 10.

The clock generator 35 generates a clock signal CLK used for generating a PN code sequence used in the spectrum spreading of a duplication control signal. The clock signal CLK generated herein is used for generating the PN code sequence, and the clock signal CLK determines the frequency band of the PN code sequence.

Fig. 11 is a block diagram for explaining the clock generator 35 of the output device 30. This clock generator 35 contains a PLL circuit 351 and timing signal generator 352. The PLL circuit 351 and timing signal generator 352 are supplied with the vertical synchronizing signal V and the horizontal synchronizing signal H separated from the video signal by the synchronization separating unit 14.

The PLL circuit 351 generates a clock signal CLK synchronized with the vertical synchronizing signal. And, the PLL circuit 351 produces the frequency of the clock signal CLK lower than 1 MHz, in this example 500 kHz, that cannot be removed by a noise canceller for removing the frequency components higher than 1 MHz as noises. The clock signal CLK generated herein is supplied to the SS duplication control signal generator 36.

The timing signal generator 352 generates various timing signals used in the output device 30. This timing signal generator 352 generates, for example, a reset signal RE that supplies the start timing for generating a PN code in the SS duplication control signal generator 36.

The SS duplication control signal generator 36 functions as the spectrum spreading means to spread the spectrum of the duplication control signal S3 extracted by the duplication control signal extracting unit 13, in the same manner as the SS duplication control signal generator 16 in the foregoing first embodiment.

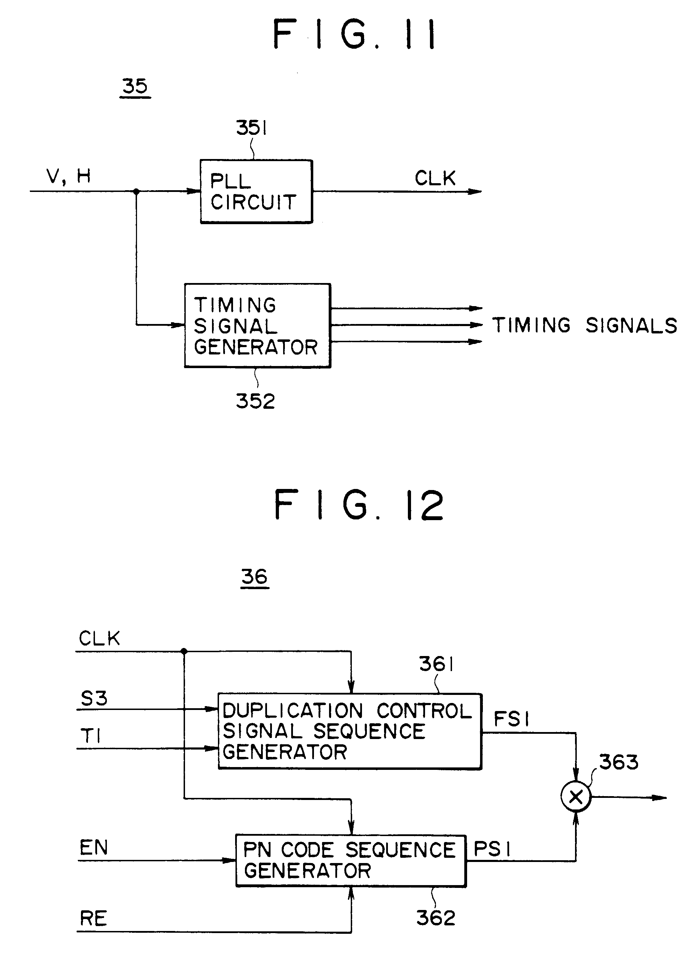

Fig. 12 is a block diagram for explaining the SS duplication control signal generator 36. As shown in Fig. 12, the SS duplication control signal generator 36 contains an SS duplication control signal sequence generator 361, a PN code sequence generator 362, and a multiplier 363. In other words, the SS duplication control signal generator 36 differs in not containing the output control unit 164 from the SS duplication control signal generator 16 in the first embodiment described with reference to Fig. 5. The other corresponding parts are configured in the same manner.

And, the PN code sequence generator 362 generates a PN code sequence repeating every one vertical interval in accordance with the reset signal RE and clock signal CLK, as a signal of a frequency lower than 1 MHz. In this case, the clock signal CLK is a signal of 500 kHz generated by the clock generator 35 as mentioned above, and the PN code sequence generated in the PN code sequence generator 362 becomes a signal of a frequency band lower than 500 kHz as well.

And, the multiplier 363 multiplies a duplication control signal sequence FS1 generated in the duplication control signal sequence generator 361 by a PN code sequence PS1 generated in the PN code sequence generator 362 to spread the spectrum of the duplication control signal sequence FS1. Therefore, the SS duplication control signal generator 36 outputs an SS duplication control signal SF1 whose frequency band is lower than 500 kHz.

This SS duplication control signal SF1 is converted into an analog signal by the D/A converter 192, and is supplied to the adder 17. The adder 17 superimposes an analog SS duplication control signal on an analog video signal S2A. In this case, since the spectrum of the SS duplication control signal is spread by using the PN code sequence PS1 generated every one vertical interval, the SS duplication control signal is superimposed on the analog video signal S2A every one vertical interval, and thus an analog video signal S7A is formed.

And, the analog video signal S7A on which the spread spectrum duplication control signal is superimposed is supplied to a monitor receiver to display pictures and a recording device 40 described later.

As mentioned above, since the SS duplication control signal SF1 is superimposed on a video signal as a signal of a frequency band lower than 1 MHz, the SS duplication control signal SF1 is not to be removed by the noise canceller that removes the high frequency components higher than 1 MHz. Therefore, passing the video signal through a noise canceller that removes the high frequency components of the video signal regarded as a noise will not remove or deteriorate the spread spectrum duplication control signal.

Next, the recording device 40 that receives the supply of the video signal from the foregoing output device 30 will be described. Fig. 10 is a block diagram for explaining the recording device 40.

As shown in Fig. 10, the recording device 40 is provided with a coding unit 21, synchronization separating unit 22, clock generator 43, SS duplication control signal detector 44, duplication control unit 25, writing unit 26, and A/D converter 291. The other parts except the clock signal generator 43 and the SS duplication control signal detector 44 are configured in the same manner as the corresponding parts in the recording device 20 in the first embodiment shown in Fig. 8.

The synchronization separating unit 22 receives a video signal S31 converted into a digital signal by the A/D converter 291 to extract the vertical synchronizing signal V and the horizontal synchronizing signal H, which are supplied to the clock signal generator 43.

The clock generator 43 is configured in the substantially same manner as the clock generator 35 of the output device 30. Therefore, the clock generator 43 here will be described as having the same configuration as the clock generator 35 shown in Fig. 11.

The PLL circuit 351 of the clock generator 43 generates a clock signal CLK synchronized with the vertical synchronizing signal in the same manner as the output device 30. In this case, the PLL circuit 351 generates a clock signal CLK of the same frequency as the clock signal used in the output device 30. Therefore, the PLL circuit 351 of the clock generator 43 generates the clock signal CLK of 500 kHz. The clock signal CLK generated herein is supplied to the SS duplication control signal detector 44 where a reverse spectrum spreading is processed, and is used for generating a PN code sequence for the reverse spectrum spreading.

The timing signal generator 352 of the clock generator 43 forms various timing signals used in this recording device 40, for example, a reset signal RE for supplying the start timing of the PN code for the reverse spectrum spreading to the SS duplication control signal detector 44 that executes the reverse spectrum spreading.

The SS duplication control signal detector 44 contains a PN code generator for generating a PN code sequence for the reverse spectrum spreading, and a multiplier that extracts a duplication control signal spread in spectrum and superimposed on a video signal, through multiplying the PN code sequence for the reverse spectrum spreading generated in this PN code generator by the video signal on which the spread spectrum duplication control signal is superimposed.

And, the SS duplication control signal detector 44 generates in accordance with the clock signal CLK the PN code sequence for the reverse spectrum spreading that repeats every one vertical interval on the basis of the reset signal RE. The PN code sequence for the reverse spectrum spreading generated herein has the same code pattern as the PN code sequence used in the spectrum spreading of the duplication control signal in the forgoing output device 30.

Accordingly, in correspondence with the video signal from the output device 30, in the recording device 40 is generated the PN code sequence for the reverse spectrum spreading, having the same timing, the same frequency, the same code pattern as the PN code sequence used in the spectrum spreading of the duplication control signal in the output device 30.

And, the reverse spectrum spreading is processed by using the PN code sequence for the reverse spectrum spreading, and thereby a duplication control signal S33 is extracted which is spread in spectrum and superimposed on the video signal supplied to the SS duplication control signal detector 44. The extracted duplication control signal S33 is supplied to the duplication control unit 25.

The duplication control unit 25 generates, in the same manner as the duplication control unit 25 of the recording device 20 in the foregoing first embodiment, a control signal S34 for controlling to write in a video signal S32 on the recording medium 200 in accordance with the duplication control signal S33, and supplies the control signal S34 to the writing unit 26.

The writing unit 26 writes in the video signal S32 on the recording medium 200 if the control signal S34 generated in accordance with the duplication control signal S33 indicates permission to write in; and if the duplication control signal S33 indicates prohibition against writing in, the writing unit 26 does not write in the video signal S32 on the recording medium 200.

In this manner, in correspondence with the video signal from the output device 30, the recording device 40 generates a PN code sequence for the reverse spectrum spreading that has the same frequency and the same code pattern at each same timing as the PN code sequence used in the spectrum spreading; and executes the reverse spectrum spreading by using the PN code sequence for the reverse spectrum spreading. It is thus possible to extract na SS duplication control signal superimposed on a video signal in the frequency band lower than 1 MHz in the output device 30.

The output device 30 and recording device 40 generate the clock signals synchronized with the vertical synchronizing signal by using the vertical synchronizing signal as the reference signal; and thereby, both of the output device 30 and recording device 40 can generate the clock signals of the same frequency to the vertical synchronizing signal.

### [Third Embodiment]

Next, a third embodiment of the video signal duplication control system according to the invention will be described which is comprised of the video signal output device and the video signal recording device.

The output device 10 and the recording device 20 in the foregoing first embodiment are designed not to remove or deteriorate the SS duplication control signal by superimposing the SS duplication control signal during the effective image plane interval, even if the TBC (Time Base Corrector) circuit is used to replace the video synchronizing signal with a new one.

And, the output device 30 and the recording device 40 in the foregoing second embodiment are designed not to remove or deteriorate the SS duplication control signal by setting the frequency band of the SS duplication control signal to a predetermined frequency band within the video signal band, for example, lower than 1 MHz and superimposing the SS duplication control signal on a video signal, even if a noise canceller for removing the high frequency components of the video signal is used.

The output device and the recording device in the third embodiment is able to comply with both of the output devices and the recording devices in the first and the second embodiments. Namely, the output device and the recording device in the third embodiment are designed not to remove or deteriorate the SS duplication control signal superimposed on a video signal, if there are the replacement of the video synchronizing signal and the removal of the high frequency components of the video signal by a noise canceller.

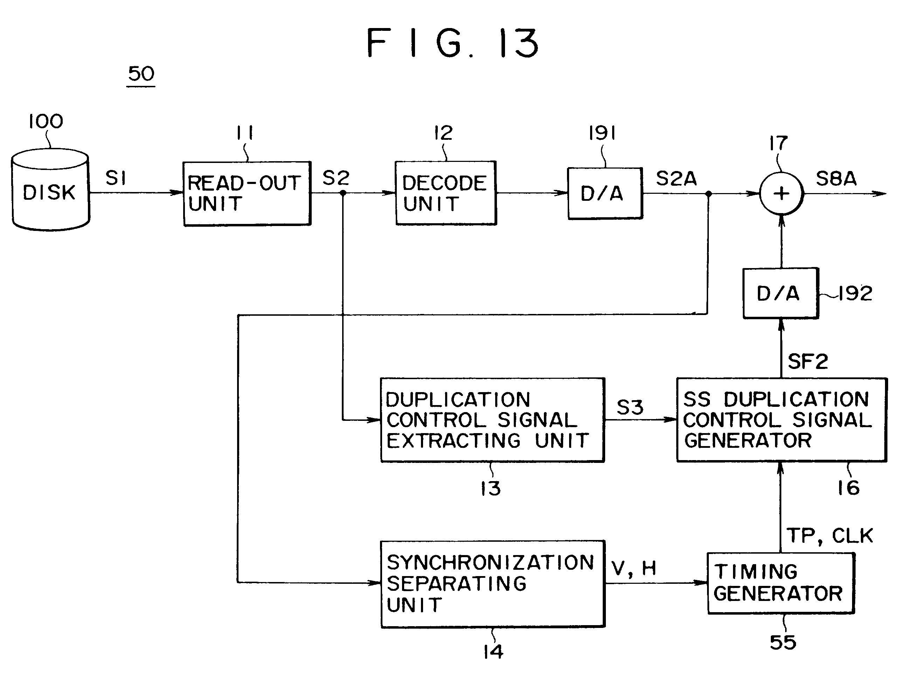

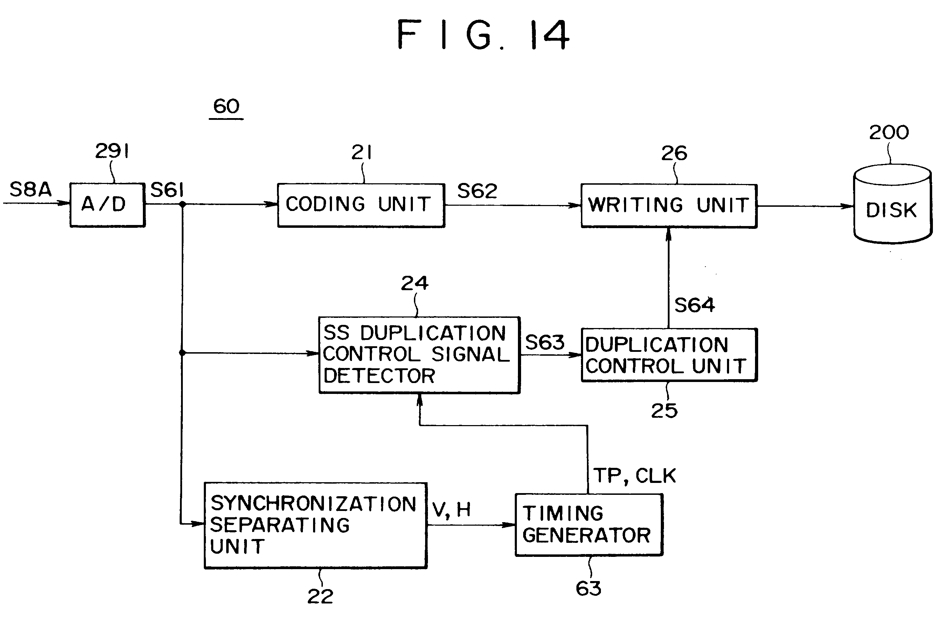

Fig. 13 is a block diagram for explaining an output device 50 in the third embodiment, and Fig. 14 is a block diagram for explaining an output device 60.

As shown in Fig. 13, the output device 50 is provided with a read-out unit 11, decode unit 12, duplication control signal extracting unit 13, synchronization separating unit 14, SS duplication control signal generator 16, adder 17, timing generator 55, and D/A converters 191, 192. The other parts except the timing generator 55 are configured in the same manner as the corresponding parts in the foregoing output device 10 in the first embodiment.

The timing generator 55 generates a superimposing position indicating signal for setting a superimposing interval during which the SS duplication control signal is superimposed, and a reference clock signal for determining the frequency band for the SS duplication control signal.

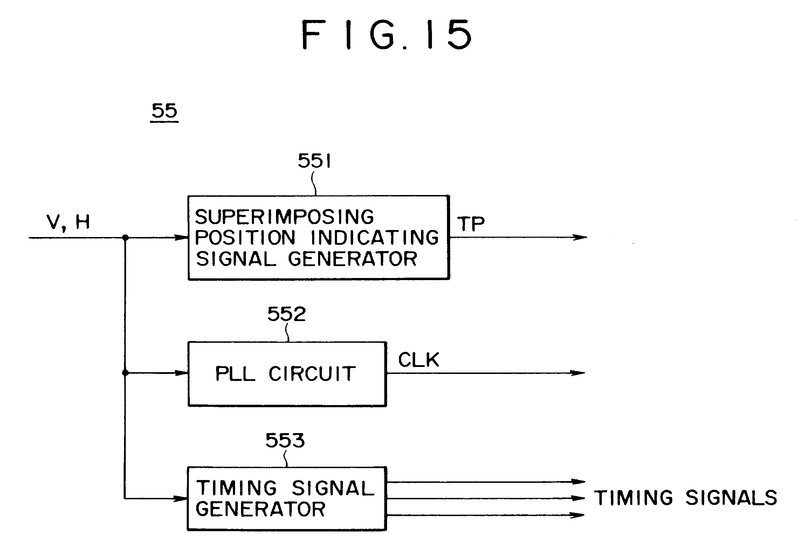

Fig. 15 is a block diagram for explaining the timing generator 55 of the output device 50. This timing generator 55 contains a superimposing position indicating signal generator 551, PLL circuit 552, and timing signal generator 553. The superimposing position indicating signal generator 551, PLL circuit 552, and timing signal generator 553 are supplied with the vertical synchronizing signal V and the horizontal synchronizing signal H separated from the video signal by the synchronization separating unit 14.

The superimposing position indicating signal generator 551 generates a superimposing position indicating signal TP for indicating a superimposing position where the spread spectrum duplication control signal is superimposed on the basis of the vertical synchronizing signal V and horizontal synchronizing signal H, in the same manner as the superimposing position indicating signal generator 151 of the superimposing position setting unit 15 in the foregoing first embodiment.

The superimposing position indicating signal generator 551 generates, in the same manner as the superimposing position indicating signal generator 151 of the output device 10 in the first embodiment, the superimposing position indicating signal TP for indicating the effective image plane interval except the vertical blanking interval VBL and horizontal blanking interval HBL as the superimposing interval during which a spread spectrum duplication control signal is superimposed. That is, the superimposing position indicating signal TP is the same signal as the superimposing position indicating signal S4 shown in Fig. 4B.

And, as shown in Fig. 4, the output device 50 superimposes during the high level interval of the superimposing position indicating signal TP being the effective image plane interval, on the basis of the superimposing position indicating signal TP, a duplication control signal (Fig. 4C) whose spectrum is spread by using a PN code sequence repeating every one vertical interval using the leading edge of the vertical synchronizing signal V as the reference.

The PLL circuit 552 in the third embodiment generates a clock signal CLK synchronized with the vertical synchronizing signal V. And, the PLL circuit 552 generates the clock signal CLK of 500 kHz that cannot be removed by a noise canceller that removes frequency components higher than 1MHz as a noise. The clock signal CLK generated by the PLL circuit 552 is used for generating the PN code sequence used in the spectrum spreading, and the frequency of the PN code sequence is determined by the clock signal CLK.

The timing signal generator 553 generates various timing signals used in the output device 50. This timing signal generator 553 generates, for example, a reset signal RE supplied to the SS duplication control signal generator 16.

Thus, the superimposing position indicating signal TP, clock signal CLK, and reset signal RE generated by the timing generator 55 are supplied to the SS duplication control signal generator 56.

The SS duplication control signal generator 16 is configured in the same manner as the SS duplication control signal generator 16 of the output device 10 as already described with reference to Fig. 5.

And, in the third embodiment, the PN code sequence generator 162 generates a PN code sequence repeating every one vertical interval in accordance with the reset signal RE and clock signal CLK, as a signal of a frequency lower than 1 MHz. As mentioned above, the clock signal CLK used for generating the PN code sequence is a signal of 500 kHz generated by the PLL circuit 552, and the frequency band of the PN code sequence generated by using the clock signal CLK becomes lower than 500 kHz.

And, the multiplier 163 multiplies a duplication control signal sequence FS generated in the duplication control signal sequence generator 161 by a PN code sequence PS generated in the PN code sequence generator 162 to spread the spectrum of the duplication control signal sequence FS, which is supplied to the output control unit 164. And, the output device 164 outputs the SS duplication control signal SF2 in correspondence with the effective image plane interval of a video signal, in accordance with the superimposing position indicating signal TP from the timing generator 55, and supplies the SS duplication control signal SF2 to the adder 17 through the D/A converter 192.

Thus, the SS duplication control signal SF2 being a signal of frequency lower than 500 kHz is superimposed on the analog video signal S2A during the effective image plane interval thereof, thus forming an analog video signal S8A to output.

In this case, even if the foregoing replacement of the video synchronizing signal and the removal of the high frequency components of the video signal are carried out, the SS duplication control signal superimposed on the video signal will securely be supplied to the recording device without being removed or deteriorated.

Next, a recording device 60 will be described which receives a video signal from the foregoing output device 50. Fig. 14 is a block diagram for explaining the recording device 60 of the second embodiment.

As shown in Fig. 14, the recording device 60 in the third embodiment is provided with a coding unit 21, synchronization separating unit 22, SS duplication control signal detector 24, duplication control unit 25, writing unit 26, timing generator 63, and A/D converter 291. The other parts except the timing signal generator 63 are configured in the same manner as the corresponding parts in the recording device 20 in the first embodiment shown in Fig. 8.

The timing generator 63 in the third embodiment is configured in the virtually same manner as the timing generator 55 of the foregoing output device 50 shown in Fig. 15. Therefore, the timing generator 63 here will be described as having the same configuration as the timing generator 55 shown in Fig. 15.

The superimposing position indicating signal generator 551, PLL circuit 552, and timing signal generator 553 contained in the timing generator 63 are supplied with the vertical synchronizing signal V and the horizontal synchronizing signal H from the synchronization separating unit 22.

And, as shown in Fig. 4B, the superimposing position indicating signal generator 551 forms, on the basis of the vertical synchronizing signal V and the horizontal synchronizing signal H, the superimposing position indicating signal TP which becomes the high level during the effective image plane interval of the video signal except the vertical blanking interval VBL and the horizontal blanking interval HBL.

The PLL circuit 552 generates a clock signal CLK1 of the same frequency as the clock signal CLK used in the output device 50, being a clock signal synchronizing with the vertical synchronizing signal. Namely, the PLL circuit 552 generates the clock signal CLK of 500 kHz. The clock signal CLK generated herein is supplied to the SS duplication control signal detector 24 that executes the reverse spectrum spreading, and is used for generating a PN code sequence for the reverse spectrum spreading.

The timing signal generator 553 generates various timing signals used in this recording device 60, for example, a reset signal RE for supplying the start timing of a PN code for the reverse spectrum spreading to the SS duplication control signal detector 24 that executes the reverse spectrum spreading.

Thus, the superimposing position indicating signal TP, clock signal CLK, and reset signal RE generated in the timing generator 63 are supplied to the SS duplication control signal generator 24.

And, the SS duplication control signal detector 24 generates a PN code sequence for the reverse spectrum spreading on the basis of the reset signal RE and the clock signal CLK. Using the reset signal RE and clock signal CLK will generates a PN code sequence for the reverse spectrum spreading, having the same timing and the same frequency as the PN code sequence used in the spectrum spreading of the duplication control signal in the output device 50.

That is, the SS duplication control signal detector 24 generates a PN code sequence for the reverse spectrum spreading as a signal of 500 kHz, being the PN code sequence repeating every one vertical interval. And, the PN code sequence generated herein has the same code pattern as the PN code sequence used in the output device 50.

The SS duplication control signal detector 24 multiplies a video signal within the effective image plane interval during which the SS duplication control signal is superimposed by a PN code sequence for the reverse spectrum spreading, having the same frequency and the same code pattern as the PN code sequence used in the spectrum spreading. Thus, the SS duplication control signal detector 24 carries out the reverse spectrum spreading to extract the duplication control signal superimposed on the video signal. An extracted duplication control signal S63 is supplied to the duplication control unit 25.

The duplication control unit 25 generates a control signal S64 for controlling the writing unit 26 on the basis of the duplication control signal S63. If the writing control signal S64 indicates permission for writing in, the writing unit 26 writes in the video signal S62 on the recording medium 200; and if the writing control signal S64 indicates prohibition against writing in, the writing unit 26 is controlled not to write in the video signal S62 on the recording medium 200.

In this manner, the recording device 60, receiving a video signal from the output device 5D, extracts the SS duplication control signal that is superimposed during the effective image plane interval of the video signal as a signal of a low frequency band, and employs the extracted SS duplication control signal for the duplication prevention control of the supplied video signal.

Further, the output device 50 and recording device 60 use the video synchronizing signal as the reference signal to determine the superimposing interval of the SS duplication control signal and the frequency of clock signal; and therefore, both of the output device 50 and recording device 60 can indicate the same superimposing interval in correspondence with the video synchronizing signal, and can securely generate the clock signal of the same frequency.

Further, in the aforementioned first, second, and third embodiments, the output devices 10, 30, 50, and the recording devices 20, 40, 60 employ the vertical synchronizing signal as the reference signal to generate the PN code sequence repeating every one vertical interval; which, however, is not limited to this. For example, even if the vertical synchronizing signal is used as the reference signal, the PN code sequence can be designed to repeat every plural vertical intervals such as every two vertical intervals or every three vertical intervals, etc. Or, the PN code sequence can be designed to repeat every 1/2 vertical intervals or every 1/3 vertical intervals by dividing the one vertical interval into two, three, etc.

In this case, while employing the vertical synchronizing signal as the reference signal, the recording devices 20, 40, 60 are needed to employ the PN code sequence repeating every two vertical intervals or every three vertical intervals, in correspondence with the output devices 10, 30, 50. Further, if the output devices 10, 30, 50 are made to employ the PN code sequence repeating every 1/2 vertical intervals or every 1/3 vertical intervals, the recording devices 20, 40, 60 are also needed to employ the PN code sequence repeating every 1/2 vertical intervals or every 1/3 vertical intervals, in correspondence with the output devices.

Further, in the aforementioned first, second, and third embodiments, the vertical synchronizing signal is used as the reference signal, which is not limited to the vertical synchronizing signal, but the horizontal synchronizing signal may be used. In this case, in the same manner as the case in the foregoing vertical synchronizing signal, the PN code sequence may be made to repeat every one horizontal interval, or every plural horizontal intervals such as every two horizontal intervals or every three horizontal intervals. Or, the PN code sequence may be made to repeat every 1/2 horizontal intervals or every 1/3 horizontal intervals by dividing one horizontal interval into plural divisions.

Further, in the foregoing first and third embodiments, the SS duplication control signal is superimposed during the effective image plane interval thereof as shown in Fig. 3. However, the SS duplication control signal is not necessarily superimposed during all of the effective intervals. For example, the SS duplication control signal may be superimposed during the effective image plane interval of a horizontal interval within a predetermined range of one vertical interval (one field) of the video signal.

For example, an effective image plane interval from the 50th horizontal interval to the 100th horizontal interval of each field may be specified as a superimposing range of the SS duplication control signal, and the SS duplication control signal may be superimposed during the effective image plane interval in this range. Also in this case, a superimposing interval during which the SS duplication control signal is superimposed may be set on the basis of the vertical synchronizing signal and the horizontal synchronizing signal.

Further, the superimposing interval for the SS duplication control signal may be set minutely on the basis of the video synchronizing signal, for example, during some tens of clocks after some clocks from the leading edge of the horizontal synchronizing signal.

Further, the superimposing interval for the SS duplication control signal may be set every plural vertical intervals such as every two vertical intervals or every three vertical intervals; or it may be set every plural horizontal intervals such as every two horizontal intervals or every three horizontal intervals, during which the SS duplication control signal may be inserted.

In this case, as shown in Fig. 16, the superimposing position indicating signal generated by using the video synchronizing signal as the reference signal is needed to be formed into a superimposing position indicating signal (Fig. 16B) that allows to insert the spread spectrum duplication control signal during the effective image plane interval at every two horizontal intervals, or a superimposing position indicating signal (Fig. 16C) that allows to insert the spread spectrum duplication control signal during the effective image plane interval at every three horizontal intervals.

Naturally, the SS duplication control signal may be inserted every two vertical intervals and every two horizontal intervals.

Further, in the foregoing first and third embodiments, the spread spectrum duplication control signal is designed to be superimposed during the effective image plane interval by using a PN code repeating every one vertical interval, which is not limited to this.

For example, using the foregoing superimposing position indicating signal as the reference signal, a PN code sequence is made to be generated at each rise of the superimposing position indicating signal. By using this PN code sequence, the spectrum of a duplication control signal is made to be spread, and the spread spectrum duplication control signal may be made to be superimposed within the effective interval of the video signal.

In this case, on the receiving side of the video signal on which the duplication control signal is superimposed, a PN code for the reverse spectrum spreading is needed to be generated on the basis of the superimposing position indicating signal generated on the basis of the video synchronizing signal. By using this PN code for the reverse spectrum spreading, the reverse spectrum spreading may be carried out.

Further, in the foregoing second and third embodiments, a noise canceller is assumed to remove the high frequency components higher than 1 MHz, and the frequency of an SS duplication control signal, namely, a spread spectrum duplication control signal is made lower than 1 MHz. However, in order to secure the SS duplication control signal not to be removed or deteriorated, it is preferable to set the frequency band of the SS duplication control signal superimposed on the video signal lower than 500 kHz, as mentioned above.

Further, the frequency band of an SS duplication control signal is set, for example, from 100 kHz to 500 kHz, within the frequency band of the video signal; and the frequency of the clock signals generated in the output devices 30, 50 and the recording devices 40, 60 may be made to come into the foregoing frequency band.

Further, the foregoing first, second, and third embodiments have been described in the analog connection wherein analog video signals are supplied to the recording device from the output device. However, the invention may be applied to the digital connection.

That is, the spread spectrum duplication control signal can be superimposed on a digital video signal as well as on an analog video signal.

Further, in the recording devices 20, 40, 60, a filtering may be carried out in advance to a video signal supplied to the SS duplication control signal detector so as to extract the video signal on which a spread spectrum duplication control signal is superimposed in a low level, and the extracted video signal may be supplied to the SS duplication control signal detector.

Further, the foregoing first, second, and third embodiments have been described on the assumption that both the output device and the recording device are the DVD device, which is not limited to this; and the invention can be applied to the output device and recording device of VTRs, digital VTRs, video disk drives, and video CD drives, etc. Namely, the invention can be applied to either of the analog equipment such as the analog VTR and the digital equipment such as the DVD device.

Further, in the foregoing embodiments, a duplication control signal is extracted from a video signal recorded on the recording medium 100, and the spectrum spreading is applied to the extracted duplication control signal by using a PN code, and the spread spectrum duplication control signal is superimposed on a video signal to be supplied to the recording device 20 and the recording device 30. However, a recording medium may be used, on which a video signal is recorded with a spread spectrum duplication control signal superimposed on in advance.

That is, the spectrum spreading is applied to a duplication control signal by using a PN code of such a low frequency that a noise canceller cannot remove, compared to that of the video signal recorded on a recording medium. And, the spread spectrum duplication control signal is superimposed within the effective image plane interval of the video signal. In this manner, a recording medium is made, on which is recorded the spread spectrum duplication control signal superimposed on a video signal within the effective image plane interval.

Also in this case, indicating a superimposing interval and generating a PN code sequence are carried out on the basis of the video synchronizing signal. Accordingly, in extracting the spread spectrum duplication control signal on the side of the recording device, it is possible to accurately indicate the superimposing interval of a video signal having the duplication control signal superimposed on on the basis of the video synchronizing signal, and at the same time, to generate the same PN code sequence as the one used in the spectrum spreading of the duplication control signal.

In this manner, in case of a recording medium on which a video signal with a spread spectrum duplication control signal superimposed on in advance is recorded, it is not necessary to carry out the following processings on the side of the output device: extracting a duplication control signal, generating a PN code, spreading the spectrum, and superimposing the spread spectrum duplication control signal on a video signal.

In this manner, when a spread spectrum duplication control signal is superimposed in advance on a video signal recorded on a recording medium, if a function to extract a duplication control signal by applying the reverse spectrum spreading is provided on the side of the recording device, the duplication control signal superimposed on the video signal in advance can be extracted to effectively carry out the duplication control.

Further, the output device may be provided with a generator of the duplication control signal, and the output device may carry out the spectrum spreading of the duplication control signal generated therein by using a PN code sequence, and may superimpose the spread spectrum duplication control signal on a video signal to output.

In this case, when a duplication control signal is not recorded on a recording medium from the beginning, or when a spread spectrum duplication control signal is not superimposed on a video signal, the duplication control signal is generated on the side of the output device. And, the duplication control can be carried out on the side of the recording device by using the duplication control signal superimposed on the video signal.

Further, in the foregoing embodiments, the output device and recording device for the DVD device have been described as a duplication control device, which is not limited to this. For example, the invention can be applied to an output device for the television signal on the side of a broadcasting station, in case of transmitting the television signal on which a spread spectrum duplication control signal is superimposed. And, the receiving side of the television signal carries out the reverse spectrum spreading to extract the duplication control signal superimposed on the video signal. On the basis of the extracted duplication control signal, the receiving side is able to carry out the duplication prevention control of the video signal.

Naturally, the invention can be applied to the output device and receiving device that transmits and receives a video signal through a cable, as in a cable TV.

Further, in the foregoing first, second, and third embodiments, the control signal for preventing duplication of a video signal is superimposed thereon as an added information. However, the added information to be superimposed on the video signal is not confined to the duplication control signal.

For example, a copyright information for identifying a copyright holder of a picture reproduced by a video signal may be made to be superimposed on the video signal, after the spectrum of the copyright information is spread. In this case, the copyright information superimposed on the video signal can be extracted by the reverse spectrum spreading to thereby identify the copyright holder and other data, which serves to prevent piracy as well as to easily confirm as piracy that a picture image involving a copyright is used without the permission of the copyright holder.

And, when the video synchronizing signal is replaced and the high frequency components of the video signal are removed as mentioned above, the copyright information is not removed or deteriorated, and it can securely be extracted for use.

As described hereinabove, in the video signal transmission method, superimposed information extraction method, video signal output device, video signal receiving device, and video recording medium according to the invention, the added information spread in spectrum and superimposed on a video signal will not be removed or deteriorated, even if the video synchronizing signal is replaced with a new one or the high frequency components of the video signal are removed.

Further, the indication of a superimposing interval and the generation of a spectrum spreading code are carried out by using the video synchronizing signal as the reference signal. Therefore, on both the output side and receiving side of the video signal, the superimposing interval can accurately be indicated in relation to the video synchronizing signal, and the spreading code used in the spectrum spreading and the spreading code used in the reverse spectrum spreading can be generated at the same timing and in the same frequency in relation to the video signal. Thereby, the reverse spectrum spreading can be carried out quickly and accurately to extract the added information superimposed on the video signal.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A video signal transmission method whereby spread spectrum added information is superimposed on a video signal and is transmitted, the video signal transmission method characterised by superimposing said spread spectrum added information during a discontinuous video signal interval determined on the basis of a video synchronizing signal of said video signal.

2. A video signal transmission method whereby spread spectrum added information is superimposed on a video signal and is transmitted, the video signal transmission method characterised by spreading a spectrum of said added information so that said spread spectrum of the added information comes into a frequency band lower than a predetermined frequency band.

3. A video signal transmission method as claimed in claim 2, wherein a signal within the frequency band lower than the predetermined frequency band is not removed by a video signal noise canceller.

4. A video signal transmission method as claimed in claim 2 or 3, wherein said spread spectrum added information is superimposed during a discontinuous video signal interval determined on the basis of a video synchronizing signal of the video signal.

5. A video signal transmission method as claimed in claim 1 or 4, wherein a superimposing interval during which said spread spectrum added information is superimposed is set within an effective image plane area.

6. A video signal transmission method as claimed in any preceding claim, wherein a spectrum of said added information is spread by means of a spreading code generated in synchronization with the video synchronizing signal.

7. A superimposed information extraction method for extracting an added information from a video signal on which spread spectrum added information is superimposed during a discontinuous video signal interval determined on the basis of a video synchronizing signal, the superimposed information extraction method comprising the steps of:
specifying a superimposing interval during which said spread spectrum added information is superimposed on the basis of said video synchronizing signal;
generating a spreading code for a reverse spectrum spreading being the same spreading code as that used in a spectrum spreading of said added information; and
applying said reverse spectrum spreading to the spread spectrum added information superimposed during the superimposing interval by using the spreading code for said reverse spectrum spreading, and extracting said added information superimposed on the video signal.

8. A superimposed information extraction method for extracting added information from a video signal on which a spread spectrum added information is superimposed as a signal within a frequency band lower than a frequency band specified in the video signal band, the superimposed information extraction method comprising the steps of:
generating a spreading code for a reverse spectrum spreading being a spreading code having the same frequency and the same code pattern as one used in the spectrum spreading of said added information; and
applying the reverse spectrum spreading to said spread spectrum added information superimposed during the superimposing interval by using the spreading code for said reverse spectrum spreading, and extracting said added information superimposed on the video signal.

9. A superimposed information extraction method for extracting added information from a video signal on which spread spectrum added information is superimposed during a discontinuous video signal interval determined on the basis of a video synchronizing signal as a signal within a frequency band lower than a predetermined frequency band, the superimposed information extraction method comprising the steps of:
specifying a superimposing interval during which said spread spectrum added information is superimposed on the basis of the video synchronizing signal;
generating a spreading code for a reverse spectrum spreading having the same frequency and the same code pattern as those used in the spectrum spreading of said added information; and
applying the reverse spectrum spreading to the spread spectrum added information by using the spreading code for said reverse spectrum spreading, and thereby extracting the added information superimposed on the video signal.

10. A superimposed information extraction method as claimed in claim 7, 8 or 9, wherein the spreading code for said reverse spectrum spreading is generated in synchronization with the video synchronizing signal.

11. A video signal output device comprising:
superimposing interval setting means for setting a discontinuous superimposing interval, being a video signal interval determined on the basis of a video synchronizing signal, during which added information is superimposed;
spectrum spreading means for spreading a spectrum of said added information, and outputting a spread spectrum signal being the added information spread in spectrum superimposed during the discontinuous superimposing interval set by said superimposing interval setting means; and
superimposing means for superimposing the spread spectrum signal outputted from said spectrum spreading means on the video signal.

12. A video signal output device comprising:
spectrum spreading means for spreading a spectrum of added information so that the spread spectrum of said added information comes into a frequency band lower than a predetermined frequency band; and
superimposing means for superimposing on a video signal a spread spectrum signal generated through spreading the spectrum of said added information by said spectrum spreading means.

13. A video signal output device as claimed in claim 12, wherein said spectrum spreading means produces a spectrum of said spread spectrum signal within a frequency band of signals not removed by a video signal noise canceller.

14. A video signal output device as claimed in claim 12 or 13, wherein the video signal output device further comprises superimposing interval setting means for setting a discontinuous superimposing interval, being a video signal interval determined on the basis of a video synchronizing signal, during which added information is superimposed; and
said spectrum spreading means output a spread spectrum signal being the added information spread in spectrum superimposed during the discontinuous superimposing interval set by said superimposing interval setting means.

15. A video signal output device as claimed in claim 11 or 14, wherein said superimposing interval setting means sets the superimposing interval within an effective image plane area.

16. A video signal output device as claimed in any one of claims 11 to 15, wherein said spectrum spreading means spreads the spectrum of said added information by using a spreading code generated in synchronization with the video synchronizing signal.

17. A video signal receiving device that receives a video signal on which spread spectrum added information is superimposed during a discontinuous video signal interval determined on the basis of a video synchronizing signal, the video signal receiving device comprising:
superimposing interval specifying means for specifying a superimposing interval during which said spread spectrum added information is superimposed on the basis of said video synchronizing signal;
spreading code generating means for generating a spreading code for a reverse spectrum spreading being the same spreading code as that used in a spectrum spreading of said added information; and
reverse spectrum spreading means for applying the reverse spectrum spreading to said spread spectrum added information superimposed during said superimposing interval by using the spreading code for the reverse spectrum spreading, and extracting said added information superimposed on said video signal.

18. A video signal receiving device that receives a video signal on which a spread spectrum added information is superimposed as a signal within a frequency band lower than a predetermined frequency band, the video signal receiving device comprising:
spreading code generating means for generating a spreading code for a reverse spectrum spreading having the same frequency and the same code pattern as a spreading code used in a spectrum spreading of said added information; and
reverse spectrum spreading means for applying the reverse spectrum spreading to said spread spectrum added information by using the spreading code for the reverse spectrum spreading, and extracting the added information superimposed on the video signal.

19. A video signal receiving device that receives a video signal on which spread spectrum added information is superimposed during a discontinuous video signal interval determined on the basis of a video synchronizing signal as a signal within a frequency band lower than a predetermined frequency band, the video signal receiving device comprising:
superimposing interval specifying means for specifying a superimposing interval during which said spread spectrum added information is superimposed on the basis of the video synchronizing signal;
spreading code generating means for generating a spreading code for a reverse spectrum spreading having the same frequency and the same code pattern as a spreading code used in a spectrum spreading of said added information; and
reverse spectrum spreading means for applying the reverse spectrum spreading to said spread spectrum added information superimposed during the superimposing interval by using the spreading code for said reverse spectrum spreading, and thereby extracting said added information superimposed on the video signal.

20. A video signal receiving device as claimed in claim 17, 18 or 19, wherein said spreading code generating means generates a spreading code for said reverse spectrum spreading in synchronization with the video synchronizing signal.

21. A video signal receiving device as claimed in claim 17, 18, 19 or 20, wherein said added information is duplication control information for controlling a duplication of a video signal on which said added information is superimposed, and the video signal receiving device further comprises a duplication control means for controlling a duplication of the received video signal in accordance with said added information extracted by said reverse spectrum spreading means.

22. A video signal transmitting and receiving system including a video signal output device that superimposes spread spectrum added information on a video signal to output and a video signal receiving device that receives the video signal outputted from the video signal output device, the video signal transmitting and receiving system, wherein:
said video signal output device comprises:
superimposing interval setting means for setting a discontinuous superimposing interval, being a video signal interval determined on the basis of a video synchronizing signal, during which added information is superimposed;
spectrum spreading means for spreading a spectrum of said added information, and outputting a spread spectrum signal being the added information spread in spectrum superimposed during the discontinuous superimposing interval set by said superimposing interval setting means; and
superimposing means for superimposing said spread spectrum signal outputted from said spectrum spreading means on the video signal; and
said video signal receiving device comprises:
superimposing interval specifying means for specifying a superimposing interval during which said spread spectrum added information is superimposed on the basis of the video synchronizing signal;
spreading code generating means for generating a spreading code for a reverse spectrum spreading being the same spreading code as that used in a spectrum spreading of said added information; and
reverse spectrum spreading means for applying a reverse spectrum spreading to said spread spectrum added information superimposed during said superimposing interval by using the spreading code for said reverse spectrum spreading, and extracting the added information superimposed on said video signal.

23. A video signal transmitting and receiving system as claimed in claim 22, wherein said video signal receiving device comprises superimposing interval specifying means for specifying the discontinuous superimposing interval during which said spread spectrum added information is superimposed on the basis of the video synchronizing signal, and the reverse spectrum spreading means applies the reverse spectrum spreading to the spread spectrum added information superimposed during said specified superimposing interval by using the spreading code for said reverse spectrum spreading.

24. A video signal transmitting and receiving system including a video signal output device that superimposes spread spectrum added information on a video signal to output and a video signal receiving device that receives said video signal outputted from the video signal output device, the video signal transmitting and receiving system, wherein:
said video signal output device comprises:
spectrum spreading means for spreading a spectrum of said added information so that the spread spectrum of said added information comes into a frequency band lower than a predetermined frequency band; and
superimposing means for superimposing on a video signal a spread spectrum signal generated through spreading the spectrum of said added information by said spectrum spreading means; and
said video signal receiving device comprises:
spreading code generating means for generating a spreading code for a reverse spectrum spreading having the same frequency and the same code pattern as a spreading code used in a spectrum spreading of said added information; and
reverse spectrum spreading means for applying the reverse spectrum spreading to said spread spectrum added information by using the spreading code for said reverse spectrum spreading, and extracting said added information superimposed on said video signal.

25. A video signal transmitting and receiving system as claimed in claim 24, wherein:
the video signal output device comprises superimposing interval setting means for setting a discontinuous superimposing interval, being a video signal interval determined on the basis of a video synchronizing signal, during which added information is superimposed, and said spectrum spreading means output a spread spectrum signal being the added information spread in spectrum superimposed during said discontinuous superimposing interval set by said superimposing interval setting means; and
said video signal receiving device comprises superimposing interval specifying means for specifying said discontinuous superimposing interval during which said spread spectrum added information is superimposed on the basis of the video synchronizing signal, and
said reverse spectrum spreading means applies the reverse spectrum spreading to said spread spectrum added information superimposed during said specified superimposing interval by using the spreading code for said reverse spectrum spreading.

26. A video signal transmitting and receiving system as claimed in claim 22, 23, 24 or 25, wherein said added information is duplication control information for controlling a duplication of a video signal on which said added information is superimposed, and the video signal receiving device comprises a duplication control means for controlling a duplication of said received video signal in accordance with said added information extracted by said reverse spectrum spreading means.

27. A video signal recording medium containing a video signal on which spread spectrum added information is superimposed during a discontinuous video signal interval determined on the basis of a video synchronizing signal.

28. A video signal recording medium containing a video signal on which spread spectrum added information having a frequency band lower than a predetermined frequency band is superimposed.

29. A video signal recording medium as claimed in claim 28, wherein a signal within a frequency band lower than a frequency band specified in said video signal band is not removed by a video signal noise canceller.

30. A video signal recording medium as claimed in claim 28 or 29, wherein spectrum of said added information is spread by means of a spreading code generated in synchronization with a video synchronizing signal.

31. A video signal recording medium as claimed in claim 28 or 29, containing a video signal on which said spread spectrum added infprmation is superimposed during a discontinuous video signal interval determined on the basis of a video synchronization signal.

32. A video signal recording medium as claimed in claim 27 or 31, wherein a superimposing interval during which said spread spectrum added information is superimposed is within an effective image plane area.

33. A video signal recording medium as claimed in any one of claims 27 to 32, wherein a spectrum of said added information is spread by means of a spreading code generated in synchronization with the video synchronizing signal.
